(19) Europäisches Patentamt / European Patent Office / Office européen des brevets

(11) **EP 4 063 949 A1**

(12) **EUROPEAN PATENT APPLICATION**

(43) Date of publication:
**28.09.2022 Bulletin 2022/39**

(21) Application number: **22161496.9**

(22) Date of filing: **11.03.2022**

(51) International Patent Classification (IPC):
**G02F 1/225** (2006.01)     **G02F 1/035** (2006.01)
**G02B 6/125** (2006.01)     **G02B 6/293** (2006.01)

(52) Cooperative Patent Classification (CPC):
**G02F 1/2255; G02F 1/0356;** G02B 6/125;
G02B 6/29352; G02B 2006/12142; G02F 2201/18

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2021   JP 2021050406**

(71) Applicant: **Sumitomo Osaka Cement Co., Ltd.
Tokyo 102-8465 (JP)**

(72) Inventors:
• **NAKATA, Yu**
  **Tokyo, 102-8465 (JP)**
• **KATAOKA, Yu**
  **Tokyo, 102-8465 (JP)**
• **MIYAZAKI, Norikazu**
  **Tokyo, 102-8465 (JP)**

(74) Representative: **Becker, Eberhard
Becker Kurig & Partner
Patentanwälte mbB
Bavariastraße 7
80336 München (DE)**

(54) **OPTICAL WAVEGUIDE ELEMENT, OPTICAL MODULATOR, OPTICAL MODULATION MODULE, AND OPTICAL TRANSMISSION DEVICE**

(57)     An optical waveguide element (300) includes: a substrate (202); and a plurality of optical waveguides (304) causing light to turn between a first direction and a second direction that is an opposite direction of the first direction in a plane of the substrate (202), the plurality of optical waveguides (304) includes first portions extending in the first direction with a predetermined distance therebetween, second portions extending in a third direction that is different from the first direction, and third portions extending in the second direction, and each of the plurality of optical waveguides (304) except for the optical waveguide in which the second portion extending in the third direction is located on an innermost side in the first direction intersects, at the third portion, another optical waveguide in which the second portion extending in the third direction is located further inward in the first direction.

FIG. 8

EP 4 063 949 A1

**Description**

**BACKGROUND**

Technical Field

The present disclosure relates to an optical waveguide element, an optical modulator, an optical modulation module, and an optical transmission device.

Related Art

In high-speed/large capacity optical fiber communication systems, optical modulators incorporating optical modulation elements that include optical waveguides formed on substrates and control electrodes adapted to control light waves propagated through the optical waveguides and serve as optical waveguide elements are used in many cases. Particularly, optical modulation elements using $LiNbO_3$ (hereinafter, also referred to as LN) having electro-optical effects in substrates are widely used in high-speed/large-capacity optical fiber communication systems since such optical modulation elements achieve small amounts of optical losses and can realize broadband optical modulation properties.

In particular, modulation schemes in the optical fiber communication systems employing, as mainstream, multi-level modulation and transmission formats achieved by adding polarization multiplexing to multi-level modulation, such as quadrature phase shift keying (QPSK), quadrature amplitude modulation (QAM), and dual polarization-quadrature phase shift keying (DP-QPSK), have been used in backbone optical transmission networks and have also been introduced into metro networks in accordance with a trend of an increase in transmission capacity in recent years.

Accelerated distribution of Internet services in recent years has led to further increases in communication traffic, and further size reduction, an increase in bandwidth, and power saving in optical modulation elements are currently being studied.

As one of measures for size reduction, an increase in bandwidth, and power saving in optical modulation elements, optical modulators using rib-shaped optical waveguides or ridge-shaped optical waveguides (hereinafter, collectively referred to as projecting-shaped optical waveguides) configured by forming strip-shaped projecting parts on surfaces of thin-film or thin-plate LN substrates (with thicknesses of equal to or less than 20 $\mu$m, for example) in order to enhance interactions between signal electric fields and guided light in the substrates (that is, in order to enhance electric field efficiency), for example, have been put into practical use (Patent Documents 1 and 2, for example).

Also, arrangement of accommodating an electronic circuit and an optical modulation element in one casing and integrating these components as an optical modulation module, and the like for the purpose of preventing a loss of high-frequency signals and increasing bandwidths in addition to size reduction of the optical modulation element itself have also been promoted. For example, an optical modulation module to achieve size reduction and an increase in bandwidth by integrating and accommodating an optical modulation element and a high-frequency driver amplifier that drives the optical modulation element in one casing and aligning and disposing a light input/output part in one surface of the casing has been proposed.

As an exemplary optical modulation element that is suitable for such an optical modulation module in which light input/output parts are aligned and disposed in one surface of a casing, Patent Document 3 describes a semiconductor optical module that includes two nest-type Mach-Zehnder-type optical waveguides to perform DP-QPSK modulation in which each of the nest-type Mach-Zehnder-type optical waveguides is configured such that light propagation directions of four parallel waveguides (arm waveguides) are turned with an optical input port and an optical output port disposed on one side of a substrate. Also, Patent Document 3 describes that at least three parallel waveguides are provided with meandering sections such that the optical path lengths of the four parallel waveguides become the same.

As another exemplary optical modulation element that is suitable for the optical modulation module in which the light input/output parts are aligned and disposed, Patent Document 4 describes an optical modulator that includes two nest-type Mach-Zehnder-type optical waveguides to perform DP-QPSK modulation in which eight parallel waveguides constituting the aforementioned two nest-type Mach-Zehnder-type optical waveguides are curved in parallel to turn light propagation directions.

However, the optical module described in Patent Document 3 is provided with the meandering sections at the parallel waveguides to adjust the optical path lengths, which leads to complicated design and a difference in the numbers of curved parts including the meandering sections among the parallel waveguides. Therefore, the optical modulator described in Patent Document 3 may lead to degradation of an extinction ratio in the optical modulation operation and distortion of a signal sequence in a signal space diagram of transmission signals.

Also, the optical modulator described in Patent Document 4 is configured such that the plurality of parallel waveguides included in the nest-type Mach-Zehnder-type optical waveguides is curved in parallel and are thereby turned, it is thus difficult to reduce the size of the optical modulation element, and the optical path lengths of the parallel waveguides are likely to be significantly different from each other. Such a difference in optical path lengths between the parallel waveguides appears as increases in optical wavelength dependency and temperature dependency of a bias point voltage in the modulation operation and may adversely affect stability of the optical modulation operation.

Patent Documents

[Patent Document 1] Japanese Patent Laid-Open No. 2007-264548
[Patent Document 2] International Publication No. 2018-031916
[Patent Document 3] Japanese Patent Laid-Open No. 2019-152732
[Patent Document 4] Japanese Patent Laid-Open No. 2019-15791

**SUMMARY**

With the aforementioned background, it is desirable to realize a configuration of an optical waveguide element including a plurality of optical waveguides that includes turnaround portions of a light propagation direction and capable of curbing occurrence of a difference in optical path lengths between the optical waveguides while reducing the element size.

According to an aspect of the disclosure, there is provided an optical waveguide element including: a substrate; and a plurality of optical waveguides causing light to turn between a first direction and a second direction that is an opposite direction of the first direction in a plane of the substrate, in which the plurality of optical waveguides includes first portions extending in the first direction with a predetermined distance therebetween, second portions extending in a third direction that is different from the first direction, and third portions extending in the second direction, and each of the plurality of optical waveguides except for the optical waveguide in which the second portion extending in the third direction is located on an innermost side in the first direction includes an intersecting part that intersects, at the third portion, another optical waveguide in which the second portion extending in the third direction is located further inward in the first direction.

According to another aspect of the disclosure, a length of the second portions of the plurality of optical waveguides is configured to increase in order from the optical waveguide in which the second portion is located on an outermost side in the first direction to the optical waveguide in which the second portion is located on the innermost side.

According to another aspect of the disclosure, when a line segment that extends in the third direction and intersects with all the first portions and all the third portions of the plurality of optical waveguides is drawn, lengths or optical path lengths along the optical waveguides from intersections between the first portions and the line segment to intersections between the third portions and the line segment of the plurality of optical waveguides are equal to each other.

According to another aspect of the disclosure, at least two adjacent optical waveguides among the plurality of optical waveguides include transition parts with an interval therebetween increasing or decreasing in size in an extending direction of a center line of the interval in a linear symmetrical manner with respect to the extending direction of the center line.

According to another aspect of the disclosure, the plurality of optical waveguides is projecting-shaped optical waveguides constituted by projecting parts extending over the substrate and a waveguide width at the intersecting parts at which the optical waveguides intersect each other is configured to be wider than a waveguide width at parts other than the intersecting parts.

According to another aspect of the disclosure, the plurality of optical waveguides has a waveguide width between adjacent intersecting parts that is the same as a waveguide width at the intersecting parts.

According to another aspect of the disclosure, the plurality of optical waveguides constitutes parallel waveguides of a Mach-Zehnder type optical waveguide.

According to another aspect of the disclosure, the plurality of optical waveguides constitutes each parallel waveguide of each two Mach-Zehnder-type optical waveguides constituting a nest-type Mach-Zehnder-type optical waveguide.

According to another aspect of the disclosure, there is provided an optical modulator including: any of the aforementioned optical waveguide elements that is an optical modulation element configured to modulate light; a casing accommodating the optical waveguide element; an optical fiber configured to input light to the optical waveguide element; and an optical fiber configured to guide light output by the optical waveguide element to outside of the casing.

According to another aspect of the disclosure, there is provided an optical modulation module including: any of the aforementioned optical waveguide elements that is an optical modulation element configured to modulate light; a casing accommodating the optical waveguide element; an optical fiber configured to input light to the optical waveguide element; an optical fiber configured to guide light output by the optical waveguide element to outside of the casing; and a drive circuit configured to drive the optical waveguide element.

According to yet another aspect of the disclosure, there is provided an optical transmission device including: either of the aforementioned optical modulator or the aforementioned optical modulation module; and an electronic circuit configured to generate an electrical signal for causing the optical waveguide element to perform a modulation operation.

According to the disclosure, it is possible to curb occurrence of a difference in optical path lengths between optical waveguides while reducing element size in an optical waveguide element including the plurality of optical waveguides that includes turnaround portions of a light propagation direction.

**BRIEF DESCRIPTION OF THE DRAWINGS**

FIG. 1 is a diagram illustrating a configuration of an optical modulation element according to a first embodiment of the disclosure.

FIG. 2 is a sectional view of the optical modulation element illustrated in FIG. 1 along II-II.

FIG. 3 is a partial detailed view of a light turnaround part B1 of the optical modulation element illustrated in FIG. 1.

FIG. 4 is a modification example of the light turnaround part B1 of the optical modulation element illustrated in FIG. 1.

FIG. 5 is a partial detailed view of a C1 part of the light turnaround part B1 illustrated in FIG. 3.

FIG. 6 is a diagram illustrating a configuration of an optical modulation element according to a modification example of the first embodiment of the disclosure.

FIG. 7 is a diagram illustrating a configuration of an optical modulation element according to a second embodiment of the disclosure.

FIG. 8 is a diagram illustrating a configuration of an optical modulation element according to a third embodiment of the disclosure.

FIG. 9 is a partial detailed view of a light turnaround part B2 of the optical modulation element illustrated in FIG. 8.

FIG. 10 is a partial detailed view of a C2 part of the light turnaround part B2 illustrated in FIG. 9.

FIG. 11 is a diagram illustrating a configuration of an optical modulation element according to a fourth embodiment of the disclosure.

FIG. 12 is a diagram illustrating a configuration of an optical modulation element according to a modification example of the fourth embodiment of the disclosure.

FIG. 13 is a diagram illustrating a configuration of an optical modulator according to a fifth embodiment of the disclosure.

FIG. 14 is a diagram illustrating a configuration of an optical modulation module according to a sixth embodiment of the disclosure.

FIG. 15 is a diagram illustrating a configuration of an optical transmission device according to a seventh embodiment of the disclosure.

**DESCRIPTION OF THE EMBODIMENTS**

Hereinafter, embodiments of the disclosure will be described with reference to the drawings.

[First Embodiment]

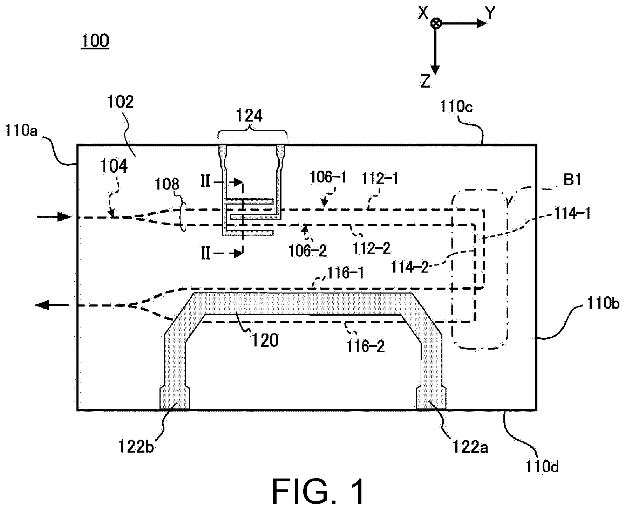

FIG. 1 is a diagram illustrating a configuration of an optical modulation element 100 that is an optical waveguide element according to a first embodiment of the disclosure. The optical modulation element 100 is constituted by an optical waveguide 104 (thick dashed line in the drawing) formed on a substrate 102.

The substrate 102 is, for example, an X-cut LN substrate. The substrate 102 has, for example, a rectangular shape and includes sides 110a and 110b extending in the up-down direction in the drawing and sides 110c and 110d extending in the left-right direction in the drawing. In FIG. 1, the normal direction directed to the side behind the paper surface of FIG. 1 (from the front surface to the back surface) is defined as an X direction, the right direction in the drawing is defined as a Y direction, and the downward direction in the drawing is defined as a Z direction as illustrated by the coordinate axes illustrated in the right upper part of the drawing. These coordinate axes are orthogonal coordinate axes and correspond to an X axis, a Y axis, and a Z axis that are crystal axes of the substrate 102, which is an LN substrate, for example.

The optical waveguide 104 is adapted such that light is input from an end portion on the upper side of the side 110a on the left side of the substrate 102 in the drawing and light is output from an end portion of the side 110a on the lower side as illustrated by the two thick arrows in the drawing.

The optical waveguide 104 includes, as a plurality of optical waveguides that causes light propagated in a first direction to turn in a second direction that is an opposite direction of the first direction in a plane of the substrate 102, two optical waveguides namely turnaround waveguides 106-1 and 106-2. In the present embodiment, the first direction is a +Y direction, the second direction is a -Y direction, and a third direction (which will be described later) is a +Z direction. In the present embodiment, the turnaround waveguides 106-1 and 106-2 are two parallel waveguides constituting a Mach-Zehnder-type optical waveguide 108.

A signal electrode 120 that causes the Mach-Zehnder-type optical waveguide 108 to perform a modulation operation and a bias electrode 124 for setting the Mach-Zehnder-type optical waveguide 108 at a predetermined initial operation bias point and compensating for variations in bias point due to DC drift or temperature drift to adjust an operation point are provided on the substrate 102.

The signal electrode 120 is formed between third portions 116-1 and 116-2 (which will be described later) extending in the second direction among the turnaround waveguides 106-1 and 106-2. In general, the signal electrode forms a so-called coplanar-type high-frequency signal line path with ground electrodes (not illustrated) disposed on both sides of the signal electrode. A transmission line path (not illustrated) for high-frequency electrical signals for causing the Mach-Zehnder-type optical waveguide 108 to perform the modulation operation is connected to a pad 122a provided at an end portion of the signal electrode 120 on the right side in the drawing through wire bonding or the like. Also, a terminal resistance (not illustrated) is connected to a pad 122b provided at an end portion of the signal electrode 120 on the left side in the drawing. In this manner, the high-frequency electrical signal input to the pad 122b is propagated as a traveling wave through the signal electrode 120 and modulates a light wave propagated through the Mach-Zehnder-type optical waveguide 108. Although the case in which an X-cut LN substrate is used has been described hitherto, the disclosure can also be applied to other substrates. In a case in which a Z-cut LN substrate is used, for example, electrodes are disposed on the waveguides instead of between the turnaround waveguides.

The substrate 102 is worked into a thickness of equal to or less than 20 $\mu$m, for example, (2 $\mu$m, for example), and is formed as a thin film. The optical waveguide 104 is a projecting-shaped optical waveguide (for example, a rib-shaped optical waveguide or a ridge-shaped optical waveguide) configured by projecting parts that are formed on the surface of the substrate 102 formed as a thin film and extend in a strip shape.

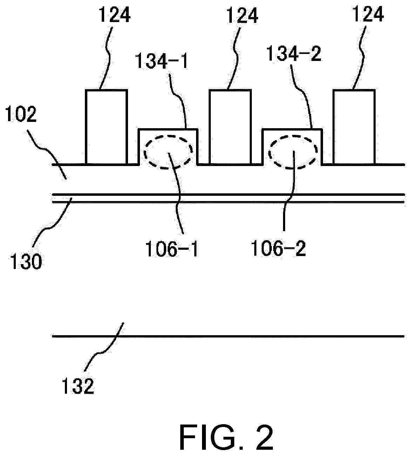

FIG. 2 is a sectional arrow view along II-II in FIG. 1. The rear surface (the surface on the lower side in the drawing) of the substrate 102 is caused to adhere to a support plate 132 made of glass or the like via an adhesive layer 130. The support plate 132 is not limited to adhesion and may be joined to the substrate 102 directly or via a joining layer. Also, the substrate 102 can also be formed through film formation on the support plate 132. On the substrate 102, each of the turnaround waveguides 106-1 and 106-2 (specifically, first portions 112-1 and 112-2, which will be described later) is configured as a projecting-shaped optical waveguide by each of projecting parts 134-1 and 134-2 formed on the substrate 102. Also, bias electrodes 124 are formed on the substrate 102 at positions at which each of the turnaround waveguides 106-1 and 106-2 is sandwiched. The two dotted-line ovals in the drawing schematically illustrate light propagated through the turnaround waveguides 106-1 and 106-2 that are projecting-shaped optical waveguides, respectively.

Referring to FIG. 1, the turnaround waveguides 106-1 and 106-2 include first portions 112-1 and 112-2 extending in the first direction (+Y direction) with a predetermined distance therebetween, second portion 114-1 and 114-2 extending in the third direction (+Z direction) that is different from the first direction, and third portions 116-1 and 116-2 extending in the second direction (-Y direction), respectively.

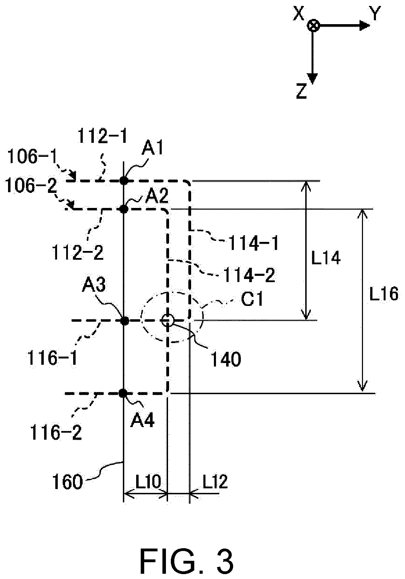

FIG. 3 is a partial detailed view of a light turnaround part B1 (inside the rectangular frame of the one-dotted chain line in the drawing) illustrated in FIG. 1. In FIG. 3, the first portions 112-1 and 112-2 and the second portions 114-1 and 114-2 are connected, and the second portions 114-1 and 114-2 and the third portions 116-1 and 116-2 are connected, via arcs or curved lines, for example.

Particularly, the third portion 116-1 of the turnaround waveguide 106-1 includes an intersecting part 140 intersecting the second portion 114-2 of the turnaround waveguide 106-2 in the present embodiment. In other words, the third portion 116-1 of the turnaround waveguide 106-1 in which the second portion is located on the further side (outer side) in the first direction out of the turnaround waveguides 106-1 and 106-2 intersects, at the intersecting part 140, the second portion 114-2 of the turnaround waveguide 106-2 in which the second portion is located on the closer side (inner side) in the first direction.

It is thus possible to curb or avoid occurrence of a difference in optical paths between the parallel waveguides in the optical modulation element 100 as compared with a configuration in the related art in which the light propagation direction is turned around by 180 degrees without the plurality of parallel waveguides intersecting each other.

Here, it is assumed for easy understanding that the first portions 112-1 and 112-2 and the second portions 114-1 and 114-2 are directly connected, and the second portions 114-1 and 114-2 and the third portions 116-1 and 116-2 are directly connected, without any intervention of arcs. In FIG. 3, a line segment 160 extending in the third direction (+Z direction) and intersecting the first portions 112-1 and 112-2 and the third portions 116-1 and 116-2 of the turnaround waveguides 106-1 and 106-2 is considered. Also, intersections between the line segment 160 and the first portions 112-1 and 112-2 are defined as points A1 and A2. In addition, intersections between the line segment 160 and the third portions 116-1 and 116-2 are defined as points A3 and A4.

Moreover, the distance in the first direction between the line segment 160 and the second portion 114-2 on the innermost side in the first direction is defined as L10. Also, the distance in the first direction between the second portions 114-2 and 114b-1 is defined as L12.

Also, the lengths of the second portions 114-1 and 114-2 in the third direction are defined as L14 and L16, respectively. Also, the length of the turnaround waveguide 106-1 from the point A1 to the point A3 is defined as L18, and the length of the turnaround waveguide 106-2 from the point A2 to the point A4 is defined as L20.

At this time, L18 and L20 are represented by the following equations.

$$L18 = 2 \times (L10 + L12) + L14 \quad (1)$$

$$L20 = 2 \times L10 + L16 \quad (2)$$

If the following equation is satisfied in Equations (1) and (2) above, a difference in optical paths between the turnaround waveguides 106-1 and 106-2 becomes zero.

$$L18 = L20 \quad (3)$$

Under the condition of Equation (3), the following equation is obtained using Equations (1) and (2).

$$L16 = L14 + 2 \times L12 \quad (4)$$

As can be understood from FIG. 3, the turnaround waveguide 106-1 takes a longer way by a distance corresponding to a double of the interval L12 in the first direction at the light turnaround part B1 as compared with the turnaround waveguide 106-2. Therefore, a difference in optical paths between the turnaround waveguides 106-1 and 106-2 becomes zero by setting the length L16 of the second portion 114-2 of the turnaround waveguide 106-2 to be longer than the length L14 of the second portion 114-1 of the turnaround waveguide 106-1 by a length that is a double of the interval L12 as in Equation (4).

To derive Equation (4), it is assumed that the first portions 112-1 and 112-2 and the second portions 114-1 and 114-2 are directly connected, and the second portions 114-1 and 114-2 and the third portions 116-1 and 116-2 are directly connected, as described above. However, as is obvious for those skilled in the art, even in a case in which the first portions 112-1 and 112-2 and the second portions 114-1 and 114-2 are connected, and the second portions 114-1 and 114-2 and the third portions 116-1 and 116-2 are connected, via arcs or curves, a conditional equation for setting the difference in optical paths between the turnaround waveguide 106-1 and the turnaround waveguide 106-2 to be zero can be derived through geometric consideration similar to that described above. Although the interval between the first portions 112-1 and 112-2 is narrower than the interval between the third portions 116-1 and 116-2 in the present embodiment, similar effects can be obtained even if the size relationships are the opposite.

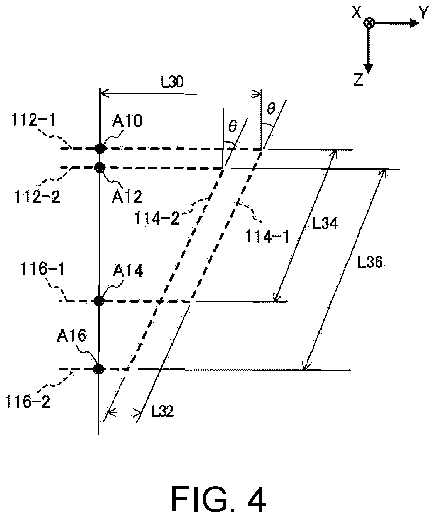

As is obvious from those skilled in the art, a conditional equation for a zero difference in optical paths can be derived through similar consideration even in a case of a modification example as in FIG. 4 in which the third direction that is the extending direction of the second portions 114-1 and 114-2 is inclined from the +Z direction.

Referring to FIG. 3, if the intersecting part 140 between the third portions 116-1 of the turnaround waveguide 106-1 and the second portion 114-2 of the turnaround waveguide 106-2 has a configuration in which these waveguides simply intersect each other with the waveguide width between the turnaround waveguide 106-1 and the turnaround waveguide 106-2 constantly maintained, an optical loss is caused at the intersecting part 140. This is because light in a fundamental mode propagated through each of the turnaround waveguide 106-1 and the turnaround waveguide 106-2, which are projecting-shaped waveguides, is affected by a change in state of sidewalls of the projecting parts on the substrate 102 constituting the intersecting part 140 and may generate reflected waves.

In the present embodiment, in order to reduce such an optical loss at the intersecting part 140, the waveguide width between the turnaround waveguide 106-1 and the turnaround waveguide 106-2 at the intersecting part 140 is configured to be wider than the waveguide widths of these optical waveguides at parts other than the intersecting part 140.

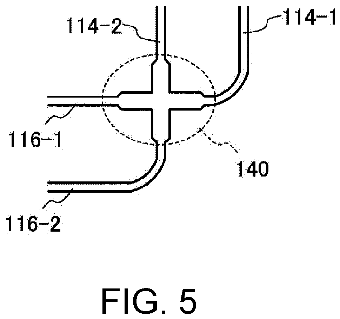

FIG. 5 is a partial detailed view of a C1 part including the intersecting part 140 in FIG. 3. As illustrated in FIG. 5, each of the waveguide widths of the third portion 116-1 of the turnaround waveguide 106-1 and the second portion 114-2 of the turnaround waveguide 106-2 constituting the intersecting part 140 is formed to be wider than that at the part other than the intersecting part 140. In this manner, light propagated through each of the third portion 116-1 of the turnaround waveguide 106-1 and the second portion 114-2 of the turnaround waveguide 106-2 is less likely to be affected by a change in state of the side walls of the projecting parts on the substrate 102 constituting these optical waveguides when passing through the intersecting part 140, and an optical loss at the intersecting part 140 is reduced.

The configuration illustrated in FIG. 5 is formed such that in the portions where the waveguide widths of the third portion 116-1 of the turnaround waveguide 106-1 and the second portion 114-2 of the turnaround waveguide 106-2 change before and after the intersecting part 140, the waveguides widths change in a tapered shape. In this manner, an optical loss due to light scattering and propagation mode conversion at the portions where the waveguide widths change is also reduced.

In the optical modulation element 100 with the aforementioned configuration, the third portion 116-1 of the turnaround waveguide 106-1 in which the second portion is located on the further side (outer side) in the first direction intersects the second portion 114-2 of the turnaround waveguide 106-2 in which the second portion is located on the closer side (inner side) in the first direction as described above.

In this manner, it is possible to curb or avoid occurrence of a difference in optical paths between the parallel waveguides in the optical modulation element 100 as compared with the configuration in the related art in which the light propagation directions are turned by 180 degrees without the plurality of parallel waveguides intersecting each other.

Therefore, there is no need to provide meandering waveguides to reduce the difference in optical paths, and it is possible to reduce the size of the substrate 102 in the optical modulation element 100.

In the optical modulation element 100, it is possible to reduce the size of the substrate 102 as compared with the configuration in the related art in which light is turned by curved portions of the plurality of parallel waveguides, since light is turned via the second portions 114-1 and 114-2 that propagate the light in the third direction that is different from the first direction (for example, a direction that perpendicularly intersects the first direction) instead of causing the light propagated in the first direction to turn in the second direction by curving the turnaround waveguide 106-1 and the turnaround waveguide 106-2.

Therefore, according to the optical modulation element 100, it is possible to curb or avoid occurrence of a difference in optical path lengths between two optical waveguides (the turnaround waveguide 106-1 and the turnaround waveguide 106-2) including the light turnaround portions while reducing the element size. As a result, the optical modulation element 100 can realize stable modulation properties with less wavelength dependency of the bias point and less degradation of the extinction ratio.

[Modification Example of First Embodiment]

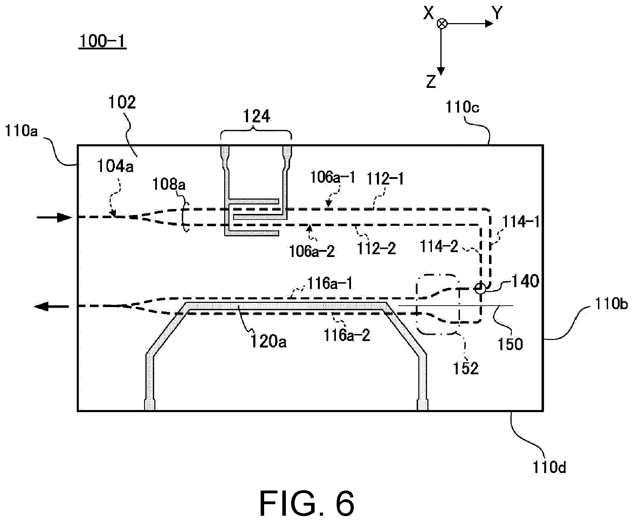

Next, a modification example of the first embodiment will be described. FIG. 6 is a diagram illustrating a configuration of an optical modulation element 100-1 that is a modification example of the optical modulation element 100 according to the first embodiment. In FIG. 6, the same reference signs as the reference signs in FIG. 1 are applied to components similar to those in the optical modulation element 100 illustrated in FIG. 1, and the above description in FIG. 1 will be incorporated herein.

Although the optical modulation element 100-1 illustrated in FIG. 6 has a configuration similar to that of the optical modulation element 100 illustrated in FIG, 1, the optical modulation element 100-1 is different from the optical modulation element 100 in that a signal electrode 120a and an optical waveguide 104a are included instead of the signal electrode 120 and the optical waveguide 104. The optical waveguide 104a includes a turnaround waveguide 106a-1 and a turnaround waveguide 106a-2 and constitutes a Mach-Zehnder-type optical waveguide 108a that is similar to the Mach-Zehnder-type optical waveguide 108 illustrated in FIG. 1. The turnaround waveguide 106a-1 and the turnaround waveguide 106a-2 include third portions 116a-1 and 116a-2 instead of the third portions 116-1 and 116-2.

Although the third portions 116a-1 and 116a-2 have configurations similar to those of the third portions 116-1 and 116-2 illustrated in FIG. 1, the third portions 116a-1 and 116a-2 are different from the third portions 116-1 and 116-2 in that a transition part 152 where the interval between the third portions 116a-1 and 116a-2 changes in the extending direction of the center line 150 of the interval in a linear symmetric manner with respect to the center line 150 is included.

In the optical modulation element 100-1 with the aforementioned configuration, it is possible to adjust the interval between the third portions 116a-1 and 116a-2 in an electrode formation section where the signal electrode 120a is formed, by including the transition part 152. Therefore, through the adjustment of the interval, it is possible to adjust an electrode width of the signal electrode 120a and an interval with a ground electrode (not illustrated) to be narrower or wider than those of the signal electrode 120 illustrated in FIG. 1 while constantly maintaining an interval between the signal electrode 120a and each of the third portions 116a-1 and 116a-2.

In this manner, according to the optical modulation element 100-1, it is possible to improve a degree of freedom in designing of an impedance of the high-frequency transmission line path constituted by the signal electrode 120a while maintaining a high electric field to be applied from the signal electrode 120a to the third portions 116a-1 to 116a-2 in addition to the advantage that it is possible to curb or avoid occurrence of a difference in optical paths in the turnaround waveguide 106a-1 and the turnaround waveguide 106a-2 similarly to the optical modulation element 100.

Although the transition part 152 is assumed to be at the third portions 116-1 and 116-2 in the present embodiment, the location of such a transmission part is not limited to the third portions. The transition part may be provided at the first portions 112-1 and 112-2 or the second portions 114-1 and 114-2 in accordance with the position where the signal electrode is formed. In other words, it is possible to form the transition part at an arbitrary position of at least two adjacent turnaround waveguides from among the plurality of turnaround waveguides in a linearly symmetrical manner with respect to the center line of the interval between the two turnaround waveguides such that the interval therebetween becomes wider or narrower in the extending direction of the center line.

[Second Embodiment]

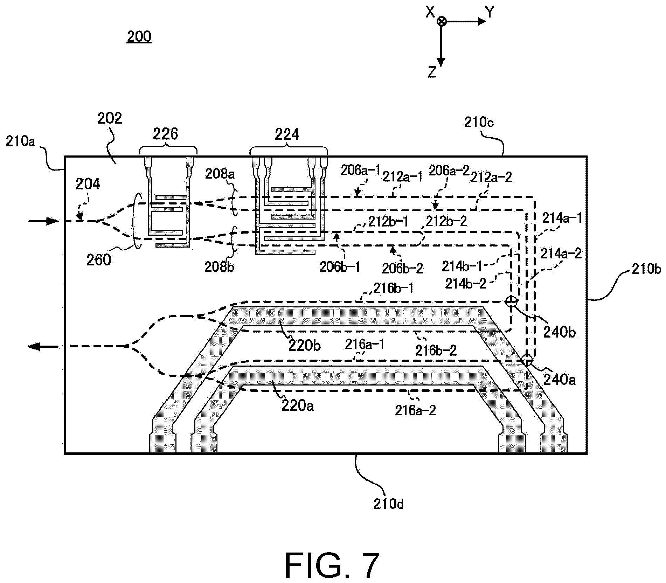

Next, a second embodiment of the disclosure will be described. FIG. 7 is a diagram illustrating a configuration of an optical modulation element 200 according to a second embodiment. The optical modulation element 200 is constituted by a nest-type Mach-Zehnder-type optical waveguide including the two Mach-Zehnder-type optical waveguides 108 illustrated in FIG. 1.

Specifically, the optical modulation element 200 is constituted by an optical waveguide 204 (thick dashed line in the drawing) formed on a substrate 202. The substrate 202 is, for example, an X-cut LN substrate similarly to the substrate 102 in FIG. 1. The substrate 202 has, for example, a rectangular shape and includes sides 210a and 210b extending in the up-down direction in the drawing and sides 210c and 210d extending in the left-right direction in the drawing similarly to the substrate 102. In FIG. 7, the normal direction directed to the side behind the paper surface in FIG. 7 (from the front surface to the back surface) is defined as an X direction, the right direction in the drawing is defined as a Y direction, and the downward direction in the drawing is defined as a Z direction as the coordinate axes illustrated in the right upper part of the drawing. These coordinate axes correspond to an X axis, a Y axis, and a Z axis that are crystal axes of the substrate 202, which is an LN substrate, for example.

The substrate 202 is worked into a thickness of equal to or less than 20 $\mu$m, for example, (2 $\mu$m, for example) and is formed as a thin film. The optical waveguide 204 is a projecting-shaped optical waveguide (a rib-shaped optical waveguide or a ridge-shaped optical waveguide, for example) constituted by projecting parts that are formed on the surface of the substrate 202 formed as a thin film and extend in a strip shape.

The optical waveguide 204 constitutes a nest-type Mach-Zehnder-type optical waveguide 260 including two Mach-Zehnder-type optical waveguides 208a and 208b. The optical waveguide 204 is adapted such that light is input from an end portion on the upper side of the side 110a on the left side of the substrate 102 in the drawing and light is output from an end portion of the side 110a on the lower side as illustrated by the two thick arrows in the drawing.

Each of the Mach-Zehnder-type optical waveguides 208a and 208b is configured to be similar to the Mach-Zehnder-type optical waveguide 108 illustrated in FIG. 1.

In other words, the Mach-Zehnder-type optical waveguide 208a includes turnaround waveguides 206a-1 and 206a-2. The turnaround waveguides 206a-1 and the turnaround waveguide 206a-2 include first portions 212a-1 and 212a-2 extending in the first direction (+Y direction) with a predetermined distance therebetween and second portions 214a-1 and 214a-2 extending in the third direction (+Z direction) that is different from the first direction, respectively. Also, the turnaround waveguides 206a-1 and 206a-2 include third portions 216a-1 and 216a-2 extending in the second direction (-Y direction).

Also, the third portion 216a-1 of the turnaround waveguide 206a-1 in which the second portion is located outer side in the first direction includes an intersecting part 240a intersecting the second portion 214a-2 of the turnaround waveguide 206a-2 in which the second portion is located on the inner side in the first direction.

Similarly, the Mach-Zehnder-type optical waveguide 208b includes turnaround waveguides 206b-1 and 206b-2. The turnaround waveguide 206b-1 and the turnaround waveguide 206b-2 include first portions 212b-1 and 212b-2 extending in the first direction (+Y direction) with a predetermined distance therebetween and second portions 214b-1 and 214b-2 extending in the third direction (+Z direction) that is different from the first direction, respectively. Also, the turnaround waveguides 206b-1 and 206b-2 include third portions 216b-1 and 216b-2 extending in the second direction (-Y direction).

Also, the third portion 216b-1 of the turnaround waveguide 206b-1 in which the second portion is located on the outer side in the first direction includes an intersecting part 240b that intersects the second portion 214b-2 of the turnaround waveguide 206b-2 in which the second portion is located on the inner side in the first direction.

Bias electrodes 224 and 226 and signal electrodes 220a and 220b for causing the Mach-Zehnder-type optical waveguides 208a and 208b to perform modulation operations, respectively are also formed on the substrate 202.

In the optical modulation element 200 with the aforementioned configuration, each of the Mach-Zehnder-type optical waveguides 208a and 208b is configured to be similar to the Mach-Zehnder-type optical waveguide 108 illustrated in FIG. 1. Therefore, it is possible to configure each of the Mach-Zehnder-type optical waveguides 208a and 208b such that a difference in optical paths between the turnaround waveguide 206a-1 and the turnaround waveguide 206a-2 and a difference in optical paths between the turnaround waveguide 206b-1 and the turnaround waveguide 206b-2 are reduced or become zero.

[Third Embodiment]

Next, a third embodiment of the disclosure will be described. In the aforementioned optical modulation element 200 according to the second embodiment, the length of the turnaround waveguides 206a-1 and 206a-2 of the Mach-Zehnder-type optical waveguide 208a and the length of the turnaround waveguides 206b-1 and 206b-2 of the Mach-Zehnder-type optical waveguide 208b are different from each other, and a difference in optical paths thus occurs between the Mach-Zehnder-type optical waveguide 208a and the Mach-Zehnder-type optical waveguide 208b. In this case, adverse influences on operation stability such as significant variations in bias voltage when the nest-type Mach-Zehnder-type optical waveguide 260 is caused to perform the modulation operation depending on the wavelength of input light may occur depending on the degree of the aforementioned difference in optical paths.

On the other hand, the optical modulation element according to the third embodiment also reduces or eliminates the aforementioned difference in optical paths between the aforementioned two Mach-Zehnder-type optical waveguides by causing the lengths (or the optical path lengths) of a total of four parallel waveguides in the two Mach-Zehnder-type optical waveguides constituting a nest-type Mach-Zehnder-type optical waveguide to conform to each other.

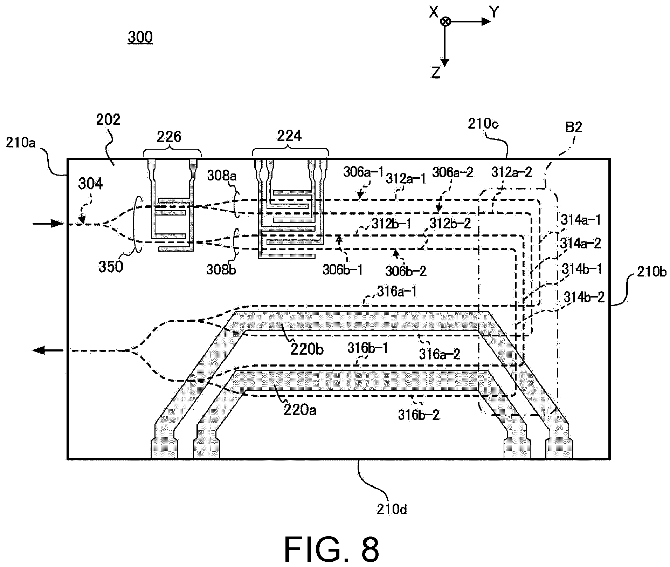

FIG. 8 is a diagram illustrating a configuration of an optical modulation element 300 according to the third embodiment. In FIG. 8, the same reference signs as those in FIG. 7 are used to indicate the same components as those in the optical modulation element 200 illustrated in FIG. 7, and the above description for FIG. 7 will be incorporated herein. The first direction is the +Y direction, the second direction is the -Y direction, and the third direction is the +Z direction in the present embodiment as well.

Although the optical modulation element 300 illustrated in FIG. 8 has a configuration similar to that of the optical modulation element 200 illustrated in FIG. 7, the optical modulation element 300 is different from the optical modulation element 200 in that an optical waveguide 304 is included instead of the optical waveguide 204.

The optical waveguide 304 includes, as a plurality of optical waveguides that causes light propagated in the first direction to turn in the second direction that is an opposite direction of the first direction in the plane of the substrate 202, four optical waveguides, namely turnaround waveguides 306a-1, 306a-2, 306b-1, and 306b-2 (hereinafter, the turnaround waveguides 306-1, 306-2, 306-3, and 306-4 will be collectively referred to as turnaround waveguides 306).

In the present embodiment, the turnaround waveguides 306a-1 and 306a-2 constitute two parallel waveguides in a Mach-Zehnder-type optical waveguide 308a. Also, the turnaround waveguides 306b-1 and 306b-2 constitute two parallel waveguides in a Mach-Zehnder-type optical waveguide 308b. In addition, the Mach-Zehnder-type optical waveguides 308a and 308b constitute a nest-type Mach-Zehnder-type optical waveguide 350.

The turnaround waveguides 306a-1, 306a-2, 306b-1, and 306b-2 include first portions 312a-1, 312a-2, 312b-1, and 312b-2 extending in the first direction (+Y direction) with a predetermined distance therebetween, respectively. Also, the turnaround waveguides 306a-1, 306a-2, 306b-1, and 306b-2 include second portions 314a-1, 314a-2, 314b-1, and 314b-2 extending in the third direction (+Z direction) that is different from the first direction with a predetermined distance therebetween, respectively. In addition, the turnaround waveguides 306a-1, 306a-2, 306b-1, and 306b-2 include third portions 316a-1, 316a-2, 316b-1, and 316b-2 extending in the second direction (-Y direction) with a predetermined distance therebetween, respectively.

Hereinafter, the first portions 312a-1, 312a-2, 312b-1, and 312b-2 will also collectively be referred to as first portions 312, and the second portions 314a-1, 314a-2, 314b-1, and 314b-2 will also collectively be referred to as second portions 314. Also, the third portions 316a-1, 316a-2, 316b-1, and 316b-2 will also collectively be referred to as third portions 316.

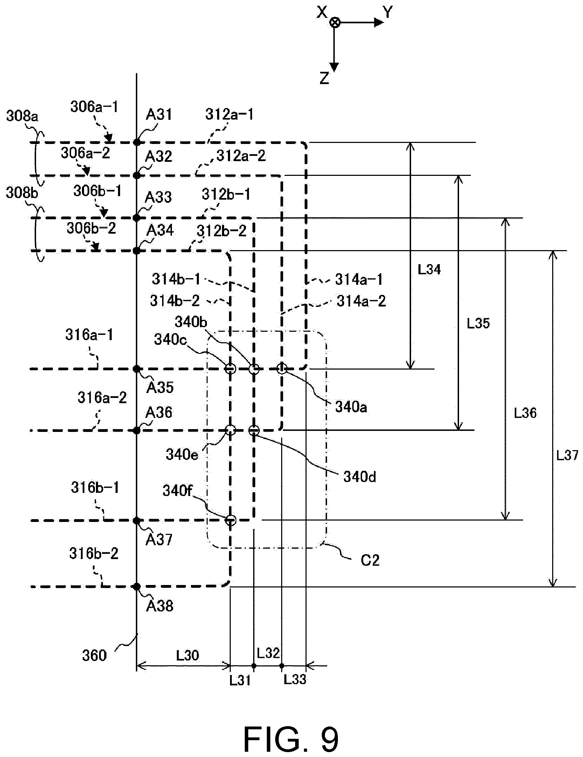

FIG. 9 is a partial detailed view of a light turnaround part B2 (inside the rectangular frame of the one-dotted chain line in the drawing) illustrated in FIG. 8. In FIG. 9, the first portion 312 and the second portion 314 are connected, and the second portion 314 and the third portion 316 are connected, via arcs or curves, for example.

Particularly, in the present embodiment, each turnaround waveguide 306 except for the turnaround waveguide 306b-2 in which the second portion 314 extending in the third direction (+Z direction) is present on the innermost side in the first direction (+Y direction) intersects, at the third portions 316, the other turnaround waveguides in which the second portions 314 extending in the third direction are present further inward in the first direction.

In other words, if attention is paid to the turnaround waveguide 306a-1, the second portion 314 of each of the other turnaround waveguides 306a-2, 306b-1, and 306b-2 is present further inward in the first direction (+Y direction) with respect to the second portion 314a-1 of the turnaround waveguide 306a-1. Also, the third portion 316a-1 of the turnaround waveguide 306a-1 intersects the second portions 314a-2, 314b-1, and 314b-2 of the turnaround waveguides 306a-2, 306b-1, and 306b-2 in which the aforementioned second portions 314 are present further inward to form intersecting parts 340a, 340b, and 340c.

If attention is paid to the turnaround waveguide 306a-2, the second portion 314 of each of the other turnaround waveguides 306b-1 and 306b-2 is present further inward in the first direction (+Y direction) with respect to the second portion 314a-2 of the turnaround waveguide 306a-2. Also, the third portion 316a-2 of the turnaround waveguide 306a-2 intersects the second portions 314b-1 and 314b-2 of the turnaround waveguides 306b-1 and 306b-2 in which the aforementioned second portions 314 are present further inward to form intersecting parts 340d and 340e.

If attention is paid to the turnaround waveguide 306b-1, the second portion 314b-2 of the other turnaround waveguide 306b-2 is present further inward in the first direction (+Y direction) with respect to the second portion 314b-1 of the turnaround waveguide 306b-1. Also, the third portion 316b-1 of the turnaround waveguide 306b-1 intersects the second portion 314b-2 of the turnaround waveguide 306b-2 to form an intersecting part 340f. Hereinafter, the intersecting parts 340a, 340b, 340c, 340d, 340e, and 340f will also collectively be referred to as intersecting parts 340.

In this manner, according to the optical modulation element 300, it is possible to curb or avoid occurrence of differences in optical paths among the four turnaround waveguides 306 constituting the four parallel waveguides included in the nest-type Mach-Zehnder-type optical waveguide 350 as compared with the configuration in the related art in which the light propagation directions are turned by 180 degrees without the plurality of parallel waveguides intersecting each other.

Here, it is assumed that the first portions 312 and the second portions 314 are connected directly, and the second portions 314 and the third portions 316 are connected directly, without any intervention of arcs for easy understanding. In FIG. 9, a line segment 360 that is a line segment extending in the third direction (+Z direction) and intersecting all the first portions 312 and the third portions 316 of the turnaround waveguides 306 will be considered. Intersections between the line segment 360 and the first portions 312a-1, 312a-2, 312b-1, and 312b-2 are defined as points A31, A32, A33, and A34, respectively. Also, intersections between the line segment 360 and the third portions 316a-1, 316a-2, 316b-1, and 316b-2 are defined as points A35, A36, A37, and A38, respectively.

Moreover, the distance in the first direction between the line segment 360 and the second portion 314b-2 on the inner most side in the first direction is defined as L30. Also, distances in the first direction between the second portions 314b-2 and 314b-1, between 314b-1 and 314a-2, and between 314a-2 and 314a-1 are defined as L31, L32, and L33, respectively.

Also, the lengths of the second portions 314a-1, 314a-2, 314b-1, and 314b-2 in the third direction are defined as L34, L35, L36, and L37, respectively.

Also, the length of the turnaround waveguide 306a-1 from the point A31 to the point A35 is defined as L41, the length of the turnaround waveguide 306a-2 from the point A32 to the point A36 is defined as L42, the length of the turnaround waveguide 306b-1 from the point A33 to the point A37 is defined as L43, and the length of the turnaround waveguide 306b-2 from the point A34 to the point A38 is defined as L44.

At this time, L41, L42, L43, and L44 are represented by the following equations.

$$L41 = 2 \times (L30 + L31 + L32 + L33) + L34 \quad (5)$$

$$L42 = 2 \times (L30 + L31 + L32) + L35 \quad (6)$$

$$L43 = 2 \times (L30 + L31) + L36 \quad (7)$$

$$L44 = 2 \times L30 + L37 \quad (8)$$

If the following equation is satisfied in Equations (5), (6), (7), and (8) above, the differences in optical paths between the turnaround waveguides 306 become zero.

$$L41 = L42 = L43 = L44 \quad (9)$$

Under the condition of Equation (9), the following equations are obtained using Equations (5), (6), (7), and (8).

$$L35 = L34 + 2 \times L33 \quad (10)$$

$$L36 = L34 + 2 \times (L32 + L33) \quad (11)$$

$$L37 = L34 + 2 \times (L31 + L32 + L33) \quad (12)$$

It is possible to ascertain from Equations (10), (11), and (12) that the differences in optical paths of the turnaround waveguides 306 can be zero by configuring the lengths of the second portions 314 of the turnaround waveguides 306 increase by a predetermined amount in the order from the turnaround waveguide 306 (that is, the turnaround waveguide 306a-1) in which the second portion 314 is located on the outermost side in the first direction to the turnaround waveguide 306 (that is, the turnaround waveguide 306b-2) in which the second portion 314 is located on the innermost side in the first direction in the configuration illustrated in FIG. 9. The aforementioned predetermined length is a length in accordance with the interval between the second portions 314 as is obvious from Equations (10), (11), and (12).

To derive Equations (10), (11), and (12), it is assumed that the first portions 312 and the second portions 314 are connected directly and the second portions 314 and the third portions 316 are connected directly as described above. However, as is obvious from those skilled in the art, even in a case in which the first portions 312 and the second portions 314 are connected, and the second portions 314 and the third portions 316 are connected, via arcs or curves, a condition for setting the differences in optical paths between the turnaround waveguides 306 to be zero can be derived through geometric consideration similar to that described above.

As is obvious from those skilled in the art, even in a case in which the third direction that is the extending direction of the second portions 314 is inclined from the +Z direction, the condition for setting the differences in optical paths can be derived through the similar consideration.

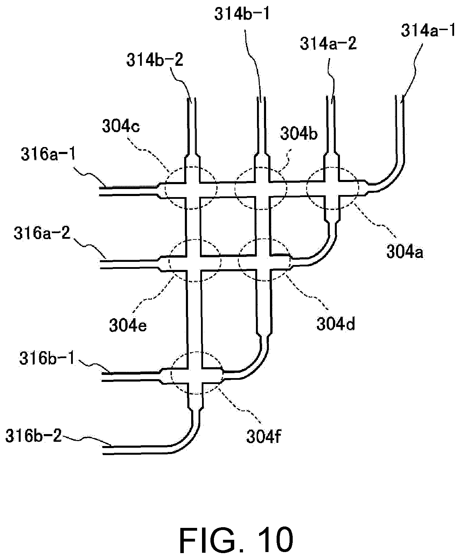

In regard to the six intersecting part 340 that can be factors that may cause an optical loss, the waveguide width of the turnaround waveguides 306 at these intersecting parts 340 is configured to be wider than the waveguide width of the turnaround waveguides 306 at the parts other than the intersecting parts 340 similarly to the intersecting parts 140 illustrated in FIG. 5 in the optical modulation element 300 as well. FIG. 10 is a partial detailed view of a C2 part including the intersecting parts 340 in FIG. 9. Particularly, the turnaround waveguides 306 are formed such that the waveguide width between adjacent intersecting parts 340 is the same as the waveguide width at the intersecting parts 340 in the optical modulation element 300. In this manner, it is possible to reduce the number of portions where the waveguide widths change in the turnaround waveguides 306 and to curb an increase in optical loss in the turnaround waveguides 306.

As a result, according to the optical modulation element 300, it is possible to realize stable modulation properties of less wavelength dependency of the bias point, less degradation of the extinction ratio, and a low loss.

[Fourth Embodiment]

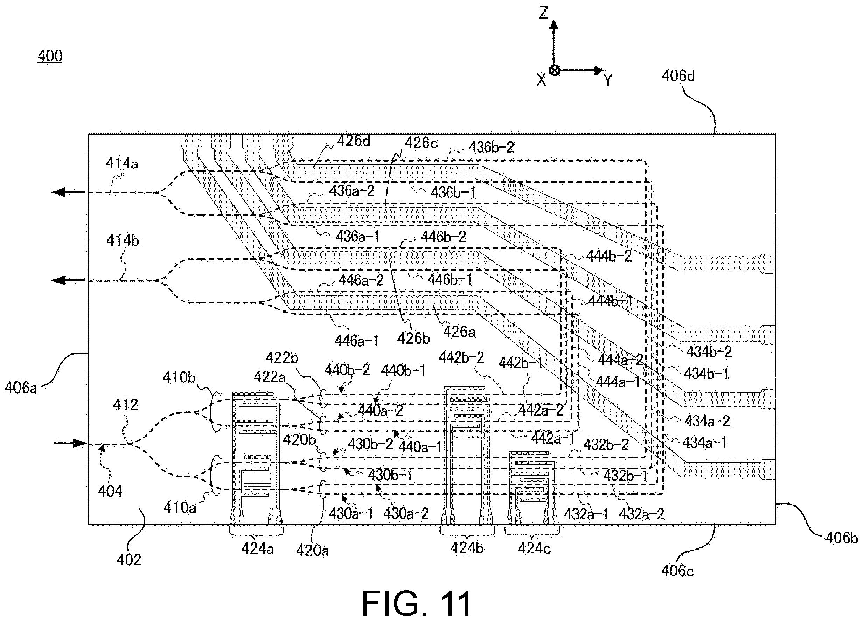

Next, a fourth embodiment of the disclosure will be described. FIG. 11 is a diagram illustrating a configuration of an optical modulation element 400 according to the fourth embodiment. An optical modulation element 400 according to the present embodiment is a DP-QPSK optical modulation element configured using two nest-type Mach-Zehnder-type optical waveguides similar to the nest-type Mach-Zehnder-type optical waveguide 350 illustrated in FIG. 8.

The optical modulation element 400 is constituted by an optical waveguide 404 (thick dashed line in the drawing) formed on a substrate 402. The substrate 402 is, for example, an X-cut LN substrate similarly to the substrate 102 in FIG. 1. The substrate 402 has, for example, a rectangular shape and includes sides 406a and 406b extending in the up-down direction in the drawing and sides 406c and 406d extending in the left-right direction in the drawing similarly to the substrate 102. In FIG. 11, the normal direction directed to the side behind the paper surface of FIG. 11 (from the front surface to the back surface) is defined as an X direction, the right direction in the drawing is defined as a Y direction, and the downward direction in the drawing is defined as a Z direction as the coordinate axes illustrated in the upper right part of the drawing. These coordinate axes correspond to an X axis, a Y axis, and a Z axis that are crystal axes of the substrate 402, which is an LN substrate, for example.

The substrate 402 is worked into a thickness of equal to or less than 20 $\mu$m, for example, (2 $\mu$m, for example) and is formed into a thin film, and the optical waveguide 404 is a projecting-shaped optical waveguide (a rib-shaped optical waveguide or a ridge-shaped optical waveguide, for example) constituted by projecting parts that are formed on the surface of the substrate 402 formed as a thin film and extend in a strip shape.

The optical waveguide 404 is a DP-QPSK modulator constituted by two nest-type Mach-Zehnder-type optical waveguides 410a and 410b. The optical waveguide 404 is adapted such that light is input from an end portion on the upper side of the side 406a of the substrate 402 on the left side in the drawing as illustrated by the thick arrow in the drawing. The input light is branched into two pieces of light by the branching waveguide 412, and the branched two pieces of light are modulated by the two nest-type Mach-Zehnder-type optical waveguides 410a and 410b, respectively.

The nest-type Mach-Zehnder-type optical waveguide 410a is constituted by two Mach-Zehnder-type optical waveguides 420a and 420b. The nest-type Mach-Zehnder-type optical waveguide 410a includes, as a plurality of optical waveguides that causes light propagated in the first direction to turn in the second direction that is an opposite direction of the first direction in the plane of the substrate 402, four turnaround waveguides 430a-1, 430a-2, 430b-1, and 430b-2. The first direction is the +Y direction, the second direction is the -Y direction, and the third direction (which will be described later) is the +Z direction in the present embodiment as well. Hereinafter, the turnaround waveguides 430a-1, 430a-2, 430b-1, and 430b-2 will also collectively be referred to as turnaround waveguides 430.

The turnaround waveguides 430a-1 and 430a-2 constitute two parallel waveguides of the Mach-Zehnder-type optical waveguide 420a, and the turnaround waveguides 430b-1 and 430b-2 constitute two parallel waveguides of the Mach-Zehnder-type optical waveguide 420b.

Similarly, the nest-type Mach-Zehnder-type optical waveguide 410b is constituted by the two Mach-Zehnder-type optical waveguides 422a and 422b, and the nest-type Mach-Zehnder-type optical waveguide 410b includes, as a plurality of optical waveguides that causes light propagated in the first direction to turn in the second direction that is an opposite direction of the first direction in a plane of the substrate 402, four turnaround waveguides 440a-1, 440a-2, 440b-1, and 440b-2. The turnaround waveguides 440a-1 and 440a-2 constitute two parallel waveguides of the Mach-Zehnder-type optical waveguide 422a, and the turnaround waveguides 440b-1 and 440b-2 constitute two parallel waveguides of the Mach-Zehnder-type optical waveguide 422b. Hereinafter, the turnaround waveguides 440a-1, 440a-2, 440b-1, and 440b-2 will also collectively be referred to as turnaround waveguides 440.

Bias electrodes 424a, 424b, and 424c for adjusting bias voltages of the two nest-type Mach-Zehnder-type optical waveguides 410a and 410b are provided on the substrate 402. Also, four signal electrodes 426a, 426b, 426c, and 426d for causing the four Mach-Zehnder-type optical waveguides 420a, 420b, 422a, and 422b to perform modulation operations, respectively, are also provided on the substrate 402.

The turnaround waveguides 430 included in the nest-type Mach-Zehnder-type optical waveguide 410a is configured similarly to the turnaround waveguide 306 included in the nest-type Mach-Zehnder-type optical waveguide 350 illustrated in FIG. 8. In other words, the turnaround waveguides 430a-1, 430a-2, 430b-1, and 430b-2 include first portions 432a-1, 432a-2, 432b-1, and 432b-2 extending in the first direction (+Y direction) with a predetermined distance therebetween, respectively.

Also, the turnaround waveguides 430a-1 ,430a-2, 430b-1, and 430b-2 include second portions 434a-1, 434a-2, 434b-1, and 434b-2 extending in the third direction (+Z direction) that is different from the first direction with a predetermined distance therebetween, respectively. Also, the turnaround waveguides 430a-1, 430a-2, 430b-1, and 430b-2 include third portions 436a-1, 436a-2, 436b-1, and 436b-2 extending in the second direction (-Y direction) with a predetermined distance therebetween, respectively.

Hereinafter, the first portions 432a-1, 432a-2, 432b-1, and 432b-2 will also collectively be referred to as first portions 432, and the second portions 434a-1, 434a-2, 434b-1, and 434b-2 will also collectively be referred to as second portions 434. Also, the third portions 436a-1, 436a-2, 436b-1, and 436b-2 will also collectively be referred to as third portions 436.

In addition, each turnaround waveguide 430 except for the turnaround waveguide 430b-2 in which the second portion 434 extending in the third direction (+Z direction) is located on the innermost side in the first direction (+Y direction) intersects, at the third portions 436, the other turnaround waveguides in which the second portions 434 extending in the third direction are located further inward in the first direction. In this manner, the differences in optical paths among the turnaround waveguides 430 can be reduced or eliminated.

Similarly, the turnaround waveguide 440 included in the nest-type Mach-Zehnder-type optical waveguide 410b is configured similarly to the turnaround waveguide 306 included in the nest-type Mach-Zehnder-type optical waveguide 350 illustrated in FIG. 8. In other words, the turnaround waveguides 440a-1, 440a-2, 440b-1, and 440b-2 include first portions 442a-1, 442a-2, 442b-1, and 442b-2 extending in the first direction (+Y direction) with a predetermined distance therebetween, respectively.

In addition, the turnaround waveguides 440a-1, 440a-2, 440b-1, and 440b-2 include second portions 444a-1, 444a-2, 444b-1, and 444b-2 extending in the third direction (+Z direction) that is different from the first direction with a predetermined distance therebetween, respectively. Also, the turnaround waveguides 440a-1, 440a-2, 440b-1, and 440b-2 include third portions 446a-1, 446a-2, 446b-1, and 446b-2 extending in the second direction (-Y direction) with a predetermined distance therebetween, respectively.

Hereinafter, the first portions 442a-1, 442a-2, 442b-1, and 442b-2 will also collectively be referred to as first portions 442, and the second portions 444a-1, 444a-2, 444b-1, and 444b-2 will also collectively be referred to as second portions 444. Also, the third portions 446a-1, 446a-2, 446b-1, and 446b-2 will also collectively be referred to as third portions 446.

Also, each turnaround waveguide 440 except for the turnaround waveguide 440b-2 in which the second portion 444 extending in the third direction (+Z direction) is located on the innermost side in the first direction (+Y direction) intersects, at the third portions 446, the other turnaround waveguides in which the second portions 444 extending in the third direction are located further inward in the first direction. In this manner, differences in optical paths among the turnaround waveguides 440 can be reduced or eliminated.

With the aforementioned configuration, each of the nest-type Mach-Zehnder-type optical waveguides 410a and 410b in the optical modulation element 400 can reduce or eliminate differences in optical paths of the parallel waveguides in these nest-type Mach-Zehnder-type optical waveguides 410a and 410b and realize stable modulation operations with less wavelength dependency.

The two pieces of light (modulated light) modulated by the nest-type Mach-Zehnder-type optical waveguides 410a and 410b are output from the output waveguides 414a and 414b to the outside of the substrate 402, respectively. The two pieces of output modulated light is formed into a transmission optical signal constituted by one beam by a polarization beam combiner (not illustrated) provided outside the substrate 402, for example, and are input to and transmitted through a transmission optical fiber cable (not illustrated).

In regard to timing deviation (skew) between signals that can occur between the aforementioned two pieces of modulated light due to the differences in optical paths remaining between the nest-type Mach-Zehnder-type optical waveguides 410a and 410b, it is only necessary to cause high-frequency data signals that are to be input to the signal electrodes 426a, 426b, 426c, and 426d to have delay for compensating for the aforementioned skew among the signals. Such an application of delay to the data signals can be performed by a digital signal processor (DSP), for example.

[Modification Example of Fourth Embodiment]

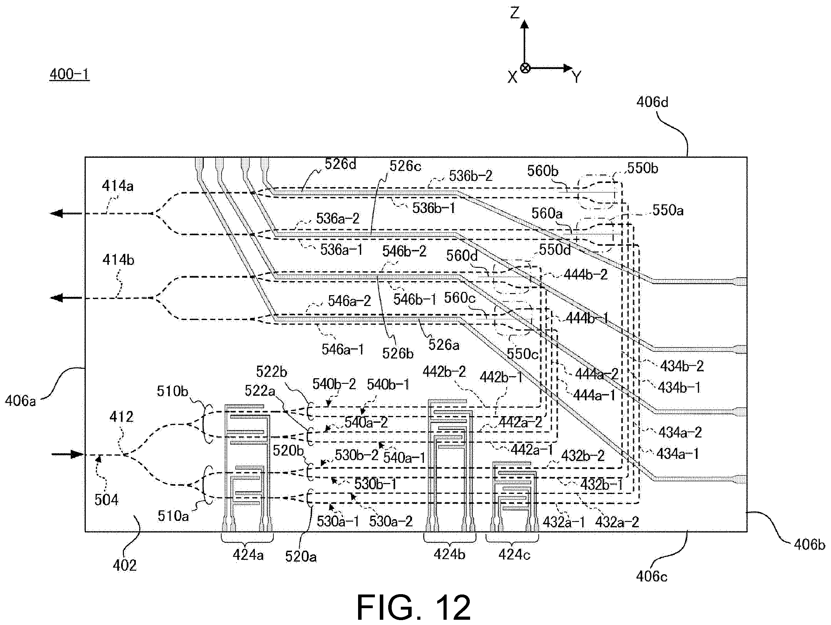

Next, a modification example of the optical modulation element 400 according to the aforementioned fourth embodiment will be described. FIG. 12 is a diagram illustrating a configuration of an optical modulation element 400-1 according to the modification example of the fourth embodiment. In FIG. 12, the same reference signs as the reference signs in FIG. 11 are used for the same components as the components illustrated in FIG. 11, and the above description of FIG. 11 will be incorporated herein.

Although the optical modulation element 400-1 has a configuration similar to that of the optical modulation element 400 illustrated in FIG. 11, the optical modulation element 400-1 is different from the optical modulation element 400 in that signal electrodes 526a, 526b, 526c, and 526d are included instead of the signal electrodes 426a, 426b, 426c, and 426d. The signal electrodes 526a, 526b, 526c, and 526d include the signal electrodes 426a, 426b, 426c, and 426d illustrated in FIG. 11 which have different electrode widths from those of the signal electrodes 426a, 426b, 426c, and 426d. Hereinafter, the signal electrodes 526a, 526b, 526c, and 526d will also collectively be referred to as signal electrodes 526.

Th optical modulation element 400-1 is different from the optical modulation element 400 illustrated in FIG. 11 in that optical waveguide 504 is included instead of the optical waveguide 404. Although the optical waveguide 504 has a configuration similar to that of the optical waveguide 404 illustrated in FIG. 11, the optical waveguide 504 is different from the optical waveguide 404 in that nest-type Mach-Zehnder-type optical waveguides 510a and 510b are included instead of the nest-type Mach-Zehnder-type optical waveguides 410a and 410b.

Although the nest-type Mach-Zehnder-type optical waveguide 510a has a configuration similar to that of the nest-type Mach-Zehnder-type optical waveguide 410a, the nest-type Mach-Zehnder-type optical waveguide 510a is different from the nest-type Mach-Zehnder-type optical waveguide 410a in that turnaround waveguides 530a-1, 530a-2, 530b-1, and 530b-2 are included instead of the turnaround waveguides 430a-1, 430a-2, 430b-1, and 430b-2 illustrated in FIG. 11. Hereinafter, the turnaround waveguides 530a-1, 530a-2, 530b-1, and 530b-2 will also collectively be referred to as turnaround waveguides 530.

Also, the nest-type Mach-Zehnder-type optical waveguide 510a is different from the nest-type Mach-Zehnder-type optical waveguide 410a in that Mach-Zehnder-type optical waveguides 520a and 520b are included instead of the Mach-Zehnder-type optical waveguides 420a and 420b illustrated in FIG. 11. The Mach-Zehnder-type optical waveguide 520a includes the turnaround waveguides 530a-1 and 530a-2 as parallel waveguides, and the Mach-Zehnder-type optical waveguide 520b includes the turnaround waveguides 530b-1 and 530b-2 as parallel waveguides.

Although the turnaround waveguides 530a-1, 530a-2, 530b-1, and 530b-2 have a configuration similar to that of the turnaround waveguides 430a-1, 430a-2, 430b-1, and 430b-2 illustrated in FIG. 11, the turnaround waveguides 530a-1, 530a-2, 530b-1, and 530b-2 are different from the turnaround waveguides 430a-1, 430a-2, 430b-1, and 430b-2 in that third portions 536a-1, 536a-2, 536b-1, and 536b-2 are included instead of the third portions 436a-1, 436a-2, 436b-1, and 436b-2 illustrated in FIG. 11. Hereinafter, the third portions 536a-1, 536a-2, 536b-1, and 536b-2 will also collectively be referred to as third portions 536.

Although the third portions 536a-1 and 536a-2 have a configuration similar to that of the third portions 436a-1 and 436a-2 illustrated in FIG. 11, the third portions 536a-1 and 536a-2 are different from the third portions 436a-1 and 436a-2 in that the transition part 550a in which an interval therebetween changes in the extending direction of a center line 560a of the interval in a linearly symmetrical manner with respect to the center line 560a is included. Although the third portions 536b-1 and 536b-2 have a configuration similar to that of the third portions 436b-1 and 436b-2 illustrated in FIG. 11, the third portions 536b-1 and 536b-2 are different from the third portions 436b-1 and 436b-2 in that a transition part 550b in which an interval therebetween changes in the extending direction of a center line 560b of the interval in a linearly symmetrical manner with respect to the center line 560b.

Similarly, although the nest-type Mach-Zehnder-type optical waveguide 510b has a configuration similar to that of the nest-type Mach-Zehnder-type optical waveguide 410b illustrated in FIG. 11, the nest-type Mach-Zehnder-type optical waveguide 510b is different from the nest-type Mach-Zehnder-type optical waveguide 410b in that turnaround waveguides 540a-1, 540a-2, 540b-1, and 540b-2 are included instead of the turnaround waveguides 440a-1, 440a-2, 440b-1, and 440b-2. Hereinafter, the turnaround waveguides 540a-1, 540a-2, 540b-1, and 540b-2 will also collectively be referred to as turnaround waveguides 540.

Also, the nest-type Mach-Zehnder-type optical waveguide 510b is different in that Mach-Zehnder-type optical waveguides 522a and 522b are included instead of the Mach-Zehnder-type optical waveguides 422a and 422b illustrated in FIG. 11. The Mach-Zehnder-type optical waveguide 522a includes the turnaround waveguides 540a-1 and 540a-2 as parallel waveguides, and the Mach-Zehnder-type optical waveguide 522b includes the turnaround waveguides 540b-1 and 540b-2 as parallel waveguides.

Although the turnaround waveguides 540a-1, 540a-2, 540b-1, and 540b-2 have a configuration similar to that of the turnaround waveguides 440a-1, 440a-2, 440b-1, and 440b-2 illustrated in FIG. 11, the turnaround waveguides 540a-1, 540a-2, 540b-1, and 540b-2 are different from the turnaround waveguides 440a-1, 440a-2, 440b-1, and 440b-2 in that third portions 546a-1, 546a-2, 546b-1, and 546b-2 are included instead of the third portions 446a-1, 446a-2, 446b-1, and 446b-2 illustrated in FIG. 11. Hereinafter, the third portions 546a-1, 546a-2, 546b-1, and 546b-2 will also collectively be referred to as third portions 546.

Although the third portions 546a-1 and 546a-2 have a configuration similar to that of the third portions 446a-1 and 446a-2 illustrated in FIG. 11, the third portions 546a-1 and 546a-2 are different from the third portions 446a-1 and 446a-2 in that a transition part 550c in which the interval therebetween changes in the extending direction of a center line 560c of the interval in a linearly symmetrical manner with respect to the center line 560c. Although the third portions 546b-1 and 546b-2 have a configuration similar to that of the third portions 446b-1 and 446b-2 illustrated in FIG. 11, the third portions 546b-1 and 546b-2 are different from the third portions 446b-1 and 446b-2 in that a transition part 550d in which the interval therebetween changes in the extending direction of a center line 560d of the interval in a linearly symmetrical manner with respect to the center line 560d is included. Hereinafter, the transition parts 550a, 550b, 550c, and 550d will also collectively be referred to as transition parts 550.

According to the optical modulation element 400-1 with the aforementioned configuration, it is possible to adjust the intervals at the third portions 536 and 546 where the signal electrodes 526 are formed, by including the transition parts 550. Through the adjustment of the interval, it is thus possible to adjust the electrode widths of the signal electrodes 526 while constantly maintaining the intervals of the signal electrodes 526 and the third portions 536 and 546.

In this manner, the optical modulation element 400-1 can realize a stable modulation operation with less wavelength dependency at each of the nest-type Mach-Zehnder-type optical waveguides 510a and 510b similarly to the optical modulation element 400 and can improve a degree of freedom in designing an impedance of the high-frequency transmission line path constituted by the signal electrodes 526 while maintaining high electric fields to be applied from the signal electrodes 526 to the third portions 536 and 546 similarly to the optical modulation element 100-1 illustrated in FIG. 6.

[Fifth Embodiment]

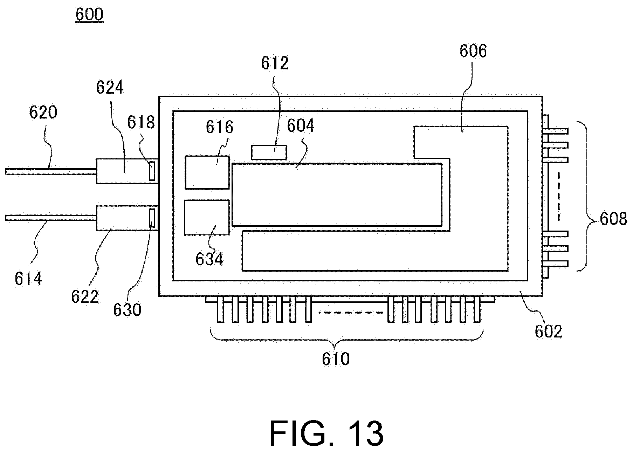

Next, a fifth embodiment of the disclosure will be described. The present embodiment provides an optical modulator using the optical modulation element according to any of the aforementioned embodiments and modification examples. FIG. 13 is a diagram illustrating a configuration of an optical modulator 600 according to the fifth embodiment. The optical modulator 600 includes a casing 602, an optical modulation element 604 accommodated in the casing 602, and a relay substrate 606. The optical modulation element 604 is any of the optical modulation element 400 and 400-1 according to the first to fourth embodiments and the modification examples described above. The casing 602 has an opening part to which a cover that is a plate body (not illustrated) is finally secured, and the inside thereof is hermetically sealed. The relay substrate 606 and the side wall of the casing 602 may be constituted by integrated laminated ceramics, and a wiring may be disposed inside the ceramic inner layer of the side wall part as well.

The optical modulator 600 also includes a signal pin 608 for inputting a high-frequency electrical signal to be used for modulation of the optical modulation element 604 and a signal pin 610 for inputting an electrical signal used for adjustment of an operation point of the optical modulation element 604.

Moreover, the optical modulator 600 includes, on the same surface (the surface on the left side in the drawing in the present embodiment) of the casing 602, an input optical fiber 614 for inputting light to the inside of the casing 602 and an output optical fiber 620 for guiding the light modulated by the optical modulation element 604 to the outside of the casing 602.

Here, the input optical fiber 614 and the output optical fiber 620 are secured to the casing 602 via supports 622 and 624 that are securing members. Light input from the input optical fiber 614 is collimated by a lens 630 disposed inside the support 622 and is then input to the optical modulation element 604 via the input optical unit 634. The input optical unit 634 is, for example, a lens and can include a beam shifter that shifts a beam position as needed. However, this is just an example, and the input of light to the optical modulation element 604 can also be performed by introducing the input optical fiber 614 into the casing 602 via the support 622 and connecting an end surface of the introduced input optical fiber 614 to an end surface of the substrate 102, 202, or 402 of the optical modulation element 604, for example, in accordance with the related art.

Light output from the optical modulation element 604 is coupled to the output optical fiber 620 via an output optical unit 616 and a lens 618 disposed at the support 624. The output optical unit 616 is, for example, a lens and can include a polarization beam combiner that couples two pieces of modulated light into one beam and a beam shifter that shifts the beam position when the optical modulation element 604 is the optical modulation element 400 or 400-1 constituting the aforementioned DP-QPSK modulator. Also, some parts of the input optical unit and the output optical unit can also be integrated.

The relay substrate 606 relays the high-frequency electrical signal input from the signal pin 608 and the electrical signal for adjusting the operation point (bias point) input from the signal pin 610 to the optical modulation element 604 using a conductive pattern (not illustrated) formed on the relay substrate 606. The aforementioned conductive pattern on the relay substrate 606 is connected to a pad (which will be described later) constituting one end of each electrode of the optical modulation element 604 through wire bonding, for example. Also, the optical modulator 600 includes a terminator 612 with a predetermined impedance inside the casing 602.

The optical modulator 600 with the aforementioned configuration is constituted using the optical modulation element 604 that is any of the optical modulation elements 400 and 400-1 according to the first to fourth embodiments and the modification examples described above, and it is thus possible to realize satisfactory light transmission with less wavelength dependency while reducing the size of the casing 602. In a case in which the optical modulation elements 100, 100-1, 200, and 300 are used, it can be realized by appropriately adjusting the position of the pin in the casing and the disposition position of the terminal substrate.

[Sixth Embodiment]

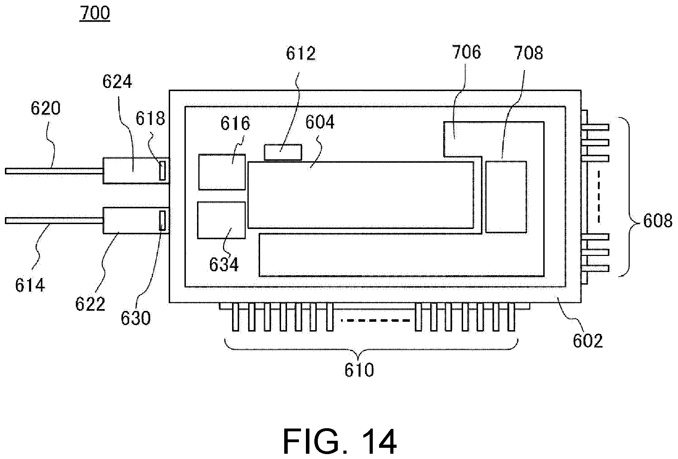

Next, a sixth embodiment of the disclosure will be described. The present embodiment provides an optical modulation module 700 using any of the optical modulation elements according to the embodiments and the modification examples described above. FIG. 14 is a diagram illustrating a configuration of the optical modulation module 700 according to the present embodiment. In FIG. 14, the same reference signs as the reference signs illustrated in FIG. 13 are used to indicate the same components as those in the optical modulator 600 according to the fifth embodiment illustrated in FIG. 13, and the above description of FIG. 13 will be incorporated herein.

Although the optical modulation module 700 has a configuration similar to that of the optical modulator 600 illustrated in FIG. 13, the optical modulation module 700 is different from the optical modulator 600 in that a circuit substrate 706 is included instead of the relay substrate 606. The circuit substrate 706 includes an electronic circuit including a drive circuit 708. The drive circuit 708 generates a high-frequency electrical signal for driving the optical modulation element 604 and outputs the generated high-frequency electrical signal to the optical modulation element 604 on the basis of a modulation signal, for example, supplied from the outside via the signal pin 608. The drive circuit 708 may be disposed on the circuit substrate 706 or may be disposed between the circuit substrate 706 and the optical modulation element 604. The circuit substrate 706 and the side wall of the casing 602 may be constituted by integrated laminated ceramics, or a wiring may be disposed in the ceramics internal layer of the side wall part as well.

The optical modulation module 700 with the aforementioned configuration is constituted using the optical modulation element 604 that is any of the optical modulation elements 100, 100-1, 200, 300, 400, and 400-1 (hereinafter, also collectively referred to as optical modulation elements 100 and the like) according to the first to fourth embodiments and the modification examples described above, and it is thus possible to realize satisfactory light transmission with less wavelength dependency while reducing the size of the casing 602 similarly to the optical modulator 600 according to the aforementioned fifth embodiment. In a case in which the optical modulation elements 100, 100-1, 200, and 300 are used, it can be realized by appropriately adjusting the position of the pin in the casing and the disposition position of the terminal substrate.

[Seventh Embodiment]

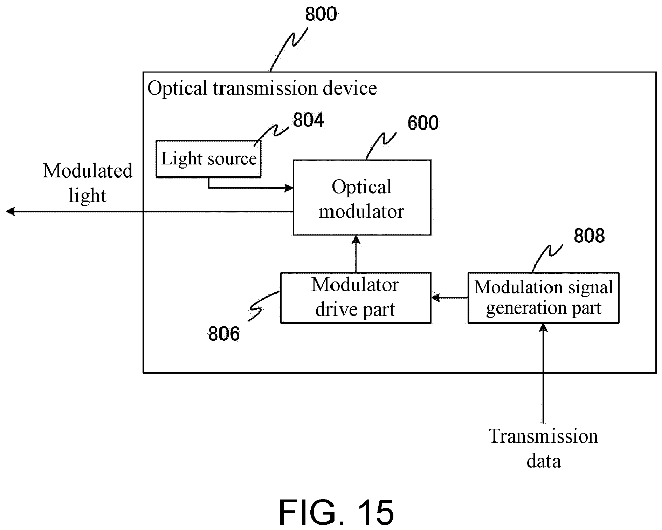

Next, a seventh embodiment of the disclosure will be described. The present embodiment provides an optical transmission device 800 with the optical modulator 600 according to the fifth embodiment mounted therein. FIG. 15 is a diagram illustrating a configuration of the optical transmission device 800 according to the present embodiment. The optical transmission device 800 includes an optical modulator 600, a light source 804 that causes light to be incident on the optical modulator 600, a modulator drive part 806, and a modulation signal generation part 808. It is also possible to use the aforementioned optical modulation module 700 instead of the optical modulator 600 and the modulator drive part 806.

The modulation signal generation part 808 is an electronic circuit that generates an electrical signal for causing the optical modulator 600 to perform a modulation operation, generates a modulation signal that is a high-frequency signal for causing the optical modulator 600 to perform an optical modulation operation in accordance with the modulation data and outputs the modulation signal to the modulator drive part 806 on the basis of transmission data given from the outside.

The modulator drive part 806 amplifies the modulation signal input from the modulation signal generation part 808 and outputs a high-frequency electrical signal to drive the signal electrodes of the optical modulation element 604 included in the optical modulator 600. As described above, it is also possible to use the optical modulation module 700 including, inside the casing 602, the drive circuit 708 that includes a circuit corresponding to the modulator drive part 806, for example, instead of the optical modulator 600 and the modulator drive part 806.

The high-frequency electrical signal is input to the signal pin 608 of the optical modulator 600 and drives the optical modulation element 604. In this manner, light output from the light source 804 is modulated by the optical modulator 600, becomes modulated light, and is then output from the optical transmission device 800. It is possible to employ not only the optical transmission device but also a transceiver device as a combination with a receiver.

The optical transmission device 800 with the aforementioned configuration uses the small-sized optical modulation element 604 capable of performing a modulation operation with less wavelength dependency similarly to the optical modulator 600 according to the fifth embodiment and the optical modulation module 700 according to the sixth embodiment described above, and it is thus possible to realize satisfactory modulation properties and to perform satisfactory light transmission.

The disclosure is not limited to the configurations of the aforementioned embodiments and alternative configurations thereof and can be implemented in various aspects without departing from the gist thereof.

For example, although the turnaround waveguides (for example, the turnaround waveguides 306) are adapted to turn the light propagated in the first direction to the second direction in the aforementioned embodiments, the direction of the light propagated through the turnaround waveguides are invertible. Therefore, each of the aforementioned turnaround waveguides can be adapted to turn the light propagated in the second direction to the first direction.

Although the optical waveguide elements are assumed to be the optical modulation element 100 and the like that perform optical modulation in the aforementioned embodiments, the optical waveguide elements in accordance with the disclosure are not limited to the optical modulation elements. The optical waveguide elements can be elements with arbitrary functions as long as the elements have light turnaround parts constituted by a plurality of optical waveguides, each of which causes the light propagation directions to be inverted in the same direction. Such optical waveguide elements can be, for example, optical switches, polarization controllers, optical directional couplers, or light attenuators.

Although the substrates 102, 202, and 402 (hereinafter, the substrate 102 and the like) constituting the optical modulation element 100 and the like are an X-cut LN substrate, the substrate 102 and the like are not limited thereto. The substrate 102 and the like may be LN substrates having other crystal orientations such as Z cut, for example. Also, the substrate 102 and the like can be constituted by arbitrary materials other than LN as long as it is possible to form the optical waveguides. Such materials can be, for example, other ferroelectric materials such as lithium tantalate or semiconductor materials such as InP and Si. For example, the optical modulation element 100 and the like can be configured as so-called silicon photonics devices using Si as the substrate 102 and the like.

As described above, the optical modulation element 300 that is an optical waveguide element, for example, includes the substrate 202 and the plurality of turnaround waveguide 306 that causes light propagated in the first direction (+Y direction) to turn in the second direction (-Y direction) that is an opposite direction of the first direction in the plane of the substrate 202. The plurality of turnaround waveguides 306 includes the first portions 312 extending in the first direction with the predetermined distance therebetween, the second portion 314 extending in the third direction (+Z direction) that is different from the first direction, and the third portions 316 extending in the second direction. Also, each of the plurality of turnaround waveguides 306 except for the turnaround waveguide 306b-2 in which the second portion 314 extending in the third direction is located on the innermost side in the first direction intersects, at the third portions 316, the other turnaround waveguides 306 in which the second portions 314 extending in the third direction are located further inward in the first direction.

With this configuration, it is possible to curb occurrence of differences in optical path lengths among the plurality of turnaround waveguides 306 while reducing the element size. As a result, it is possible to realize a stable operation with less wavelength dependency.

Also, the optical modulation element 300 is configured such that the lengths of the second portions 314 of the plurality of turnaround waveguides 306 increase in the order from the turnaround waveguide 306 in which the second portion 314 is located on the outermost side in the first direction to the turnaround waveguide 306 in which the second portion 314 is located on the innermost side. With this configuration, differences in optical paths among the plurality of turnaround waveguides 306 can be effectively compensated.

In the optical modulation element 300, when a line segment 360 that extends in the third direction (+Z direction) and intersects all the first portions 312 and all the third portions 316 of the turnaround waveguide 306 is drawn, the turnaround waveguides 306 have equal lengths or optical path lengths along the turnaround waveguides 306 from the intersections between the first portions and the line segment 360 to the intersections between the third portions and the line segment 360. With this configuration, it is possible to curb or prevent occurrence of differences in optical path lengths among the plurality of turnaround waveguides 306 while reducing the element size. As a result, a stable operation with less wavelength dependency is realized.

In the optical modulation element 400-1, at least two adjacent turnaround waveguides 530 and 540 from among the plurality of turnaround waveguides 530 and 540 include, at the third portions 536 and 546, for example, a transition part 550 in which the interval in the length direction of the turnaround waveguides 530 and 540 (that is, the second direction) becomes wider or narrower in a linearly symmetrical manner with respect to a line 560 extending in the length direction at the center of the interval (that is, the second direction that is the length direction of the turnaround waveguides 530 and 540 in the third direction).

With this configuration, it is possible to improve a degree of freedom in designing an impedance of the high-frequency transmission line path constituted by the signal electrodes 526 while maintaining high electric fields to be applied from the signal electrodes 526 forming the third portions 536 and 546 to the third portions 536 and 546, for example.

In the optical modulation element 300, the plurality of turnaround waveguides 306 is projecting optical waveguides constituted by the projecting parts extending over the substrate 202, and the waveguide width at the intersecting part 340 where the waveguides intersect each other is configured to be wider than the waveguide width at parts other than the intersecting parts 340. With this configuration, it is possible to reduce an optical loss at the intersecting parts 340 and to realize the optical modulation element 300 with a low loss.

In the optical modulation element 300, the waveguide width between adjacent intersecting parts 340 is the same as the waveguide width in the intersecting parts 340 in the plurality of turnaround waveguides 306. With this configuration, it is possible to reduce the number of portions where the waveguide widths of the turnaround waveguides 306 change and to curb an increase in optical loss in the turnaround waveguides 306.

In the optical modulation element 100 and the like, the plurality of turnaround waveguides (for example, the turnaround waveguides 106-1 and 106-2) constitutes parallel waveguides of a Mach-Zehnder-type optical waveguide (for example, the Mach-Zehnder-type optical waveguide 108). With this configuration, it is possible to realize satisfactory properties such as low wavelength dependency in the Mach-Zehnder-type optical waveguide in which the degree of differences in optical paths in the two parallel waveguides significantly affects the optical properties.

In the optical modulation element 300, the plurality of turnaround waveguides 306 constitutes each of the parallel waveguides of the two Mach-Zehnder-type optical waveguides constituting the nest-type Mach-Zehnder-type optical waveguide. With this configuration, it is possible to realize satisfactory properties such as low wavelength dependency in the nest-type Mach-Zehnder-type optical waveguide in which a degree of difference in the optical paths in the total of four parallel waveguides significantly affects the optical properties.

The optical modulator 600 according to the fifth embodiment includes the optical modulation element 604 that is any of the optical modulation element 100 and the like and the casing 602 that accommodates the optical modulation element 604. The optical modulator 600 includes the input optical fiber 614 that inputs light to the optical modulation element 604 and the output optical fiber 620 that guides light output by the optical modulation element 604 to the outside of the casing 602.

Also, the optical modulation module 700 according to the sixth embodiment includes the optical modulation element 604 that is any of the optical modulation element 100 and the like and the casing 602 that accommodates the optical modulation element 604. The optical modulation module 700 also includes the input optical fiber 614 that inputs light to the optical modulation element 604 and the output optical fiber 620 that guides light output by the optical modulation element 604 to the outside of the casing 602. The optical modulation module 700 further includes the drive circuit 708 that drives the optical modulation element 604.

The optical transmission device 800 according to the seventh embodiment includes an optical modulator 600 or the optical modulation module 700 and the modulation signal generation part 808 that is an electronic circuit for generating an electrical signal for causing the optical modulation element 604 to perform a modulation operation.

With these configurations, it is possible to realize the optical modulator 600, the optical modulation module 700, or the optical transmission device 800 capable of realizing satisfactory light transmission with less wavelength dependency while reducing the size of the casing.

[Reference Signs List]

100, 100-1, 200, 300, 400, 400-1, 604 Optical modulation element
102, 202, 402 Substrate

104, 104a, 204, 304, 404, 504 Optical waveguide

106-1, 106-2. 106a-1, 106a-2, 206a-1, 206a-2, 206b-1, 206b-2, 306, 306a-1, 306a-2, 306b-1, 306b-2, 430, 430a-1, 430a-2, 430b-1, 430b-2, 440, 440a-1, 440a-2, 440b-1, 440b-2, 530, 530a-1, 530a-2, 530b-1, 530b-2, 540, 540a-1, 540a-2, 540b-1, 540b-2 Turnaround waveguide

108, 108a, 208a, 208b, 308a, 308b, 420a, 420b, 422a, 422b, 520a, 520b, 522a, 522b Mach-Zehnder-type optical waveguide

110a, 110b, 110c, 110d, 210a, 210b, 210c, 210d, 406a, 406b, 406c, 406d Side

112-1, 112-2, 212a-1, 212a-2, 212b-1, 212b-2, 312, 312a-1, 312a-2, 312b-1, 312b-2, 432, 432a-1, 432a-2, 432b-1, 432b-2, 442, 442a-1, 442a-2, 442b-1, 442b-2 First portion

114-1, 114-2, 214a-1, 214a-2, 214b-1, 214b-2, 314, 314a-1, 314a-2, 314b-1, 314b-2, 434, 434a-1, 434a-2, 434b-1, 434b-2, 444, 444a-1, 444a-2, 444b-1, 444b-2 Second portion

116-1, 116-2, 116a-1, 116a-2, 216a-1, 216a-2, 216b-1, 216b-2, 316, 316a-1, 316a-2, 316b-1, 316b-2, 436, 436a-1, 436a-2, 436b-1, 436b-2, 446, 446a-1, 446a-2, 446b-1, 446b-2, 536, 536a-1, 536a-2, 536b-1, 536b-2, 546, 546a-1, 546a-2, 546b-1, 546b-2 Third portion

120, 120a, 220a, 220b, 426a, 426b, 426c, 426d Signal electrode

122a, 122b Pad

124, 224, 226, 424a, 424b, 424c Bias electrode

130 Adhesive layer

132 Support plate

134-1, 134-2 Projecting part

140, 240a, 240b, 340a, 340b, 340c, 340d, 340e, 340f Intersecting part

150, 560a, 560b, 560c, 560d Center line

152, 550a, 550b, 550c, 550d Transition part

260, 350, 410a, 410b, 510a, 510b Nest-type Mach-Zehnder-type optical waveguide

412 Branching waveguide

414a, 414b Output waveguide

600 Optical modulator

602 Casing

606 Relay substrate

608, 610 Signal pin

612 Terminator

614 Input optical fiber

616 Output optical unit

618, 630 Lens

622, 624 Support

634 Input optical unit

700 Optical modulation module

706 Circuit substrate

708 Drive circuit

800 Optical transmission device

804 Light source

806 Modulator drive part

808 Modulation signal generation part

## Claims

1. An optical waveguide element (100, 100-1, 200, 300, 400, 400-1, 604) comprising:

   a substrate (102, 202, 402); and
   a plurality of optical waveguides (104, 104a, 204, 304, 404, 504) causing light to turn between a first direction and a second direction that is an opposite direction of the first direction in a plane of the substrate (102, 202, 402), wherein the plurality of optical waveguides (104, 104a, 204, 304, 404, 504) includes
   first portions extending in the first direction with a predetermined distance therebetween, second portions extending in a third direction that is different from the first direction, and third portions extending in the second direction, and
   each of the plurality of optical waveguides (104, 104a, 204, 304, 404, 504) except for the optical waveguide in which the second portion extending in the third direction is located on an innermost side in the first direction includes an intersecting part that intersects, at the third portion, another optical waveguide in which the second portion extending in the third direction is located further inward in the first direction.

2. The optical waveguide element (100, 100-1, 200, 300, 400, 400-1, 604) according to claim 1, wherein a length of the second portions of the plurality of optical waveguides (104, 104a, 204, 304, 404, 504) is configured to increase in order from the optical waveguide in which the second portion is located on an outermost side in the first direction to the optical waveguide in which the second portion is located on the innermost side.

3. The optical waveguide element (100, 100-1, 200, 300, 400, 400-1, 604) according to claim 1 or 2, wherein when a line segment that extends in the third direction and intersects with all the first portions and all the third portions of the plurality of optical waveguides (104, 104a, 204, 304, 404, 504) is drawn, lengths or optical path lengths along the optical waveguides from intersections between the first portions and the line segment to intersections between the third portions and the line segment of the plurality of optical waveguides are equal to each other.

4. The optical waveguide element (100, 100-1, 200, 300, 400, 400-1, 604) according to any one of claims 1 to 3, wherein at least two adjacent optical waveguides among the plurality of optical waveguides (104, 104a, 204, 304, 404, 504) include transition parts with an interval therebetween increasing or decreasing in size in an extending direction of a center line of the interval in a linear symmetrical manner with respect to the extending direction of the center line.

5. The optical waveguide element (100, 100-1, 200, 300, 400, 400-1, 604) according to any one of claims 1 to 4, wherein the plurality of optical waveguides (104, 104a, 204, 304, 404, 504) is projecting-shaped optical waveguides constituted by projecting parts (134-1, 134-2) extending over the substrate (102, 202, 402) and a waveguide width at the intersecting parts at which the optical waveguides intersect each other is configured to be wider than a waveguide width at parts other than the intersecting parts.

6. The optical waveguide element (100, 100-1, 200, 300, 400, 400-1, 604) according to claim 5, wherein the plurality of optical waveguides (104, 104a, 204, 304, 404, 504) has a waveguide width between adjacent intersecting parts that is the same as a waveguide width at the intersecting parts.

7. The optical waveguide element (100, 100-1, 200, 300, 400, 400-1, 604) according to any one of claims 1 to 4, wherein the plurality of optical waveguides (104, 104a, 204, 304, 404, 504) constitutes parallel waveguides of a Mach-Zehnder-type optical waveguide.

8. The optical waveguide element (100, 100-1, 200, 300, 400, 400-1, 604) according to claim 7, wherein the plurality of optical waveguides (104, 104a, 204, 304, 404, 504) constitutes each parallel waveguide of each two Mach-Zehnder-type optical waveguides constituting a nest-type Mach-Zehnder-type optical waveguide.

9. An optical modulator (600) comprising:

   the optical waveguide element (100, 100-1, 200, 300, 400, 400-1, 604) according to any one of claims 1 to 8 that is an optical modulation element configured to modulate light;
   a casing (602) accommodating the optical waveguide element (100, 100-1, 200, 300, 400, 400-1, 604);
   an optical fiber (614) configured to input light to the optical waveguide element (100, 100-1, 200, 300, 400, 400-1, 604); and
   an optical fiber (620) configured to guide light output by the optical waveguide element (100, 100-1, 200, 300, 400, 400-1, 604) to outside of the casing (602).

10. An optical modulation module (700) comprising:

   the optical waveguide element (100, 100-1, 200, 300, 400, 400-1, 604) according to any one of claims 1 to 8 that is an optical modulation element configured to modulate light;
   a casing (602) accommodating the optical waveguide element (100, 100-1, 200, 300, 400, 400-1, 604);
   an optical fiber (614) configured to input light to the optical waveguide element (100, 100-1, 200, 300, 400, 400-1, 604);
   an optical fiber (620) configured to guide light output by the optical waveguide element (100, 100-1, 200, 300, 400, 400-1, 604) to outside of the casing (602); and
   a drive circuit (708) configured to drive the optical waveguide element (100, 100-1, 200, 300, 400, 400-1, 604).

11. An optical transmission device (800) comprising:

the optical modulator (600) according to claim 9 or the optical modulation module (700) according to claim 10; and an electronic circuit configured to generate an electrical signal for causing the optical waveguide element (100, 100-1, 200, 300, 400, 400-1, 604) to perform a modulation operation.

FIG. 1

124    124    124

134-1    134-2

102

130    106-1    106-2

132

# FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

800

Optical transmission device

804

Light source

600

Modulated light

Optical modulator

808

Modulator drive part

806

Modulation signal generation part

Transmission data

FIG. 15

Europäisches Patentamt
European Patent Office
Office européen des brevets

# EUROPEAN SEARCH REPORT

Application Number

**EP 22 16 1496**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/260321 A1 (SUGIYAMA MASAKI [JP]) 23 October 2008 (2008-10-23) | 1-3,7 | INV. G02F1/225 |
| Y | * figures 1, 3 * <br> * paragraphs [0005], [0048], [0049], [0084] * | 5,6,9-11 | G02F1/035 <br><br> ADD. G02B6/125 |
| X | US 2012/154901 A1 (KAWASHIMA HIROSHI [JP] ET AL) 21 June 2012 (2012-06-21) * figure 12 * * paragraphs [0010], [0097] * | 1,4,7,8 | G02B6/293 |
| Y | CN 110 609 399 A (UNIV SOUTH CHINA NORMAL) 24 December 2019 (2019-12-24) * figures 3, 4 * | 9-11 | |
| Y | MURANAKA Y ET AL: "Monolithically Integrated 4x4 Optical Switch with Cascaded MZIs and EAM-Gate Array", 2017 EUROPEAN CONFERENCE ON OPTICAL COMMUNICATION (ECOC), IEEE, 17 September 2017 (2017-09-17), pages 1-3, XP033336289, DOI: 10.1109/ECOC.2017.8345916 [retrieved on 2018-04-24] * figures 3, 4 * | 5,6 | |

TECHNICAL FIELDS SEARCHED (IPC)

G02F

The present search report has been drawn up for all claims

| Place of search | Date of completion of the search | Examiner |
|---|---|---|
| The Hague | 19 July 2022 | Topak, Eray |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 1496

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2022

| Patent document cited in search report | | Publication date | Patent family member(s) | | Publication date |
|---|---|---|---|---|---|
| US 2008260321 | A1 | 23-10-2008 | JP | 4594744 B2 | 08-12-2010 |
| | | | JP | 2006195256 A | 27-07-2006 |
| | | | US | 2006159384 A1 | 20-07-2006 |
| | | | US | 2008260321 A1 | 23-10-2008 |
| US 2012154901 | A1 | 21-06-2012 | JP WO | 2011122538 A1 | 08-07-2013 |
| | | | US | 2012154901 A1 | 21-06-2012 |
| | | | US | 2013208348 A1 | 15-08-2013 |
| | | | WO | 2011122538 A1 | 06-10-2011 |
| CN 110609399 | A | 24-12-2019 | NONE | | |

EPO FORM P0459

For more details about this annex : see Official Journal of the European Patent Office, No. 12/82

**EP 4 063 949 A1**

**Patent documents cited in the description**

- JP 2007264548 A
- JP 2019152732 A
- JP 2019015791 A